# EUROPEAN PATENT SPECIFICATION

(11) **EP 2 177 942 B1**
(45) Date of publication and mention of the grant of the patent: **20.02.2013**
(21) Application number: 08777846.0
(22) Date of filing: 03.07.2008
(51) Int. Cl.: G02B 1/11, B24B 13/00, G02B 1/04, G02B 1/10

(54) **PROCESS FOR PRODUCING SPECTACLE LENS**
VERFAHREN ZUR HERSTELLUNG EINER BRILLENGLASES
PROCÉDÉ DE FABRICATION DE VERRE DE LUNETTES

(30) Priority: 27.07.2007 JP 2007196227
(43) Date of publication of application: 21.04.2010
(73) Proprietor: Hoya Corporation, Tokyo 161-8525 (JP)
(72) Inventor: HASEGAWA, Keigo, Tokyo 161-8525 (JP); MAEDA, Akihiro, Tokyo 161-8525 (JP); WATANABE, Yoshifumi, Tokyo 161-8525 (JP)
(74) Representative: Betten & Resch
(86) International application number: PCT/JP2008/062094
(87) International publication number: WO 2009/016921

(56) References cited:
- EP-A2- 0 038 281
- JP-A- 2 148 002
- JP-A- 2006 201 424
- US-A- 5 638 479

## Description

### Technical Field

The present invention relates to a method of manufacturing a spectacle lens.

### Background Art

Since the optical surface of a spectacle lens is required to have high accuracy, it has been conventionally formed by three processes, rough edging, sandblasting, and polishing.

However, such a conventional optical surface formation process requires a long manufacturing time, and this leads to a low productivity and a high manufacturing cost. To overcome this situation, in recent years, since high-accuracy machined surfaces have come to be obtained along with rapid progress of machining apparatuses, a spectacle lens having an optical surface machined by, e.g., lathe machining has been put to practical use, as disclosed in, for example, Japanese Patent Laid-Open No. 2002-182011 and PCT (WO) 2003-525760.

A method of manufacturing a lens described in Japanese Patent Laid-Open No. 2002-182011 cuts the surface of a lens blank by a super-precision lathe and forms a transparent film (hard coat film) on the machined surface, thereby reducing the roughness of the machined surface. The lens blank is made of, e.g., methacrylate resin, polyurethane resin, polycarbonate resin, acrylate resin, or polyester resin. The film is made of an organosilicon compound or a hydrolysis product thereof and metal oxide particles.

The spectacle lens surface fabrication method described in PCT(WO) 2003-525760 includes two cutting steps using a cutting tool (milling tool) and a smoothing tool (milling tool), and a varnish coating step.

In the cutting step using a cutting tool, the surface is cut by moving the cutting tool along the continuous path in a targeted surface envelope to form two grooves in the surface to be adjacent to each other at a predetermined pitch of 0.01 mm to 3 mm, thereby obtaining a smooth surface with an arithmetic average roughness Ra of 1.1 µm to about 0.7 µm.

In the cutting step using a smoothing tool, the machined surface is smoothed by moving the smoothing tool along the continuous path formed by two paths adjacent to each other at a predetermined pitch of 0.2 mm to 3 mm. This generates bandpass filtering for surface undulations between low frequencies corresponding to the targeted surface envelope and high frequencies corresponding to background roughness. A smooth surface with an arithmetic average roughness (Ra) less than 1.1 µm is obtained by this smoothing process.

In the varnish coating step, the smoothed surface is coated with varnish to obtain a surface equivalent to a polished surface. The varnish is a material with a refractive index equal to that of the spectacle lens (within an error tolerance of +0.01), and contains, for example, a mixture of polyacrylate monomer, diacrylate monomer and triacrylate monomer, or a halide, preferably, bromine-containing epoxy acrylate oligomer.

Document US-A1-5638479 discloses optical parts having have a feature of having smoothly coated surfaces tor incident and emergent lights covered thereover with a light transmitting solid coating layer, and can be manufactured by a simplified process at least without needing polishing, together with the advantages of being weatherproof in atmosphere of high temperature and high humidity and antiozonant.

Document EP-A2-0038281 discloses a process for modifying reflection properties of surfaces.

As further prior art, reference is made to JP-A-02148002.

Document JP-A-2006-201424 discloses a plastic lens base covered with a cover layer which is pretreated prior to adding an anti-reflection layer by polishing.

### Disclosure of Invention

### Problem to be Solved by the Invention

Unfortunately, since the invention described in Japanese Patent Laid-Open No. 2002-182011 cuts the optical surface of a lens material by a super-precision lathe to set the maximum height P-V to 0.04 µm or less, it requires a long cutting time and leads to a low productivity and a high manufacturing cost because of the use of an expensive high-precision lathe.

Also, when a film is formed and left intact thereafter, middle- and long-wavelength components of the roughness of the machined surface appear as wave-like patterns (undulations) on the film surface. This poses a problem that a light beam which irradiates the surface forms a stripe pattern on it due to the difference in brightness between the crests and bases of the wave-like patterns depending on the irradiation state. It can easily be expected that the optical characteristics (lens power) in a minute region change due to the influence of the crests and bases of the wave-like patterns (a change in lens power will be referred to as "oscillation of the transmitted image" hereinafter).

Middle- and long-wavelength components of the surface roughness correspond to an envelope which connects the crests and bases of adjacent projections and grooves forming a cutting trace (lathe mark), and represent the background roughness (wave-like patterns) of the machined surface. Also, short-wavelength components of the surface roughness correspond to minute projections and grooves forming the cutting trace. The short-wavelength components and middle- and long-wavelength components of the surface roughness will be described in more detail later.

Since the invention described in PCT(WO) 2003-525760 cuts the optical surface of a spectacle lens twice using a cutting tool and a smoothing tool to smooth the machined surface, it requires a long cutting time and leads to a low productivity. Also, when a film is formed and left intact thereafter, middle- and long-wavelength components of the roughness of the cut surface are expected to appear as wave-like patterns on the film surface.

Under the circumstance, the inventors of the present invention closely examined the relationship between the surface properties (roughness or wave-like patterns) of an optical surface and a film formed on the optical surface, and conducted various types of experiments. The experimental results revealed that, it is possible to erase any cutting trace even in a relatively rough machined optical surface and eliminate any stripe pattern and any oscillation of the transmitted image attributed to wave-like patterns even on that optical surface by forming a film on the optical surface and polishing the film surface to smooth short-wavelength components and middle- and long-wavelength components of the surface roughness. Also, because it is only necessary to polish the film, a desired optical surface could be obtained free from any shape sag of the optical surface. Moreover, by setting the refractive index of the film nearly equal to that of the spectacle lens, the optical characteristics and quality of the spectacle lens could be improved free from, e.g., scattering and reflection by the machined surface and from any cutting trace which was otherwise expected to be visually observed by testing the optical surface by an optical test method.

The present invention has been made in consideration of the above-mentioned conventional problems and the experimental results, and has as its object to provide a method of manufacturing a spectacle lens which can erase any cutting trace, improve the optical characteristics and quality of the spectacle lens free from any stripe pattern, any oscillation of the transmitted image, and any shape sag of the optical surface, and manufacture the spectacle lens at low cost. Means of Solution to the Problem

In order to achieve the above-mentioned object, a method of manufacturing a spectacle lens according to the present invention is defined in claim 1. Advantageous embodiments are defined in dependent claims. Effects of the Invention

In the present invention, since the optical surface of a spectacle lens is machined and a film is formed on the machined surface, it is possible to smooth short-wavelength components of the roughness of the machined surface.
Also, since the film surface is polished into a mirror surface, it is possible to eliminate any wave-like patterns on the film surface attributed to the machined surface. This, in turn, makes it possible to prevent any stripe pattern and any oscillation of the transmitted image attributed to the wave-like patterns.

In a preferred embodiment of a spectacle lens according to the present invention, the film is made of a material harder than that of the spectacle lens.

Also, in a preferred embodiment of a spectacle lens according to the present invention, the roughness Rt of the machined surface of the spectacle lens is 0.02 to 0.1 µm.
When the roughness Rt of the machined surface of the spectacle lens is set to 0.02 to 0.1 µm, it is possible to employ a general cutting machine and, in turn, to cut the machined surface at low cost. Note that, when a super-precision cutting machine is employed to cut the machined surface, it is possible to manufacture a spectacle lens in a short time as in a general cutting machine and, in turn, to improve the productivity because high accuracy is unnecessary.

Also, according to the present invention, a wave-like shape corresponding to wavelengths of 0.05 to 0.5 mm is formed on the spectacle lens after the step of hardening the film.

Also, in a preferred embodiment of a spectacle lens according to the present invention, the film is a hard coat film.
When the film is a hard coat film, it is possible to improve the abrasion resistance of the spectacle lens.

Also, in a preferred embodiment of a spectacle lens according to the present invention, the thickness of the film is 2 to 50 µm.
When the thickness of the film is 2 to 50 µm, it is possible to prevent any shape sag of the optical surface.

Also, in a preferred embodiment of a spectacle lens according to the present invention, the amount of polishing of the film is 1 to 5 µm.
When the amount of polishing of the film is 1 to 5 µm, it is possible to prevent any shape sag of the optical surface because the amount of polishing removal is small.

Also, in a preferred embodiment of a spectacle lens according to the present invention, the blank of the spectacle lens is a plastic lens blank.

Also, in a preferred embodiment of a spectacle lens according to the present invention, the plastic lens blank is one of a urethane optical blank and an allyl optical blank.

### Brief Description of Drawings

Fig. 1 is a sectional view of a spectacle lens manufactured by a method of manufacturing a spectacle lens according to the present invention;
Fig. 2 is an enlarged view of a portion A shown in Fig. 1;
Fig. 3A is a schematic view of the cross-section of the machined surface of the spectacle lens;
Fig. 3B is a differential interference contrast micrograph of the machined surface;
Fig. 4A is a schematic view of the cross-section of an optical surface obtained by forming a film on the machined surface;
Fig. 4B is a differential interference contrast micrograph of the optical surface obtained by forming a film on the machined surface;
Fig. 5A is a schematic view of the cross-section of the optical surface having the film polished,
Fig. 5B is a differential interference contrast micrograph of the optical surface;
Fig. 6 is a view showing the schematic arrangement of an NC curve generator;
Fig. 7 is a flowchart for explaining a process of manufacturing a spectacle lens;
Fig. 8 is a perspective view showing the state in which a spectacle lens is transferred to a dipping unit;
Fig. 9 is a perspective view showing the state in which the spectacle lens is transferred to a spinning unit;
Fig. 10A is a differential interference contrast micrograph of the spectacle lens taken by a white light interference shape measurement apparatus;
Fig. 10B is a view showing a projection test image of the spectacle lens;
Fig. 11A is a differential interference contrast micrograph of the spectacle lens taken by the white light interference shape measurement apparatus when a hard coat film is applied onto the lens and is left intact without polishing;
Fig. 11B is a view showing a projection test image of the spectacle lens; and
Fig. 12 is a view showing an optical test of the spectacle lens.

### Best Mode for Carrying Out the Invention

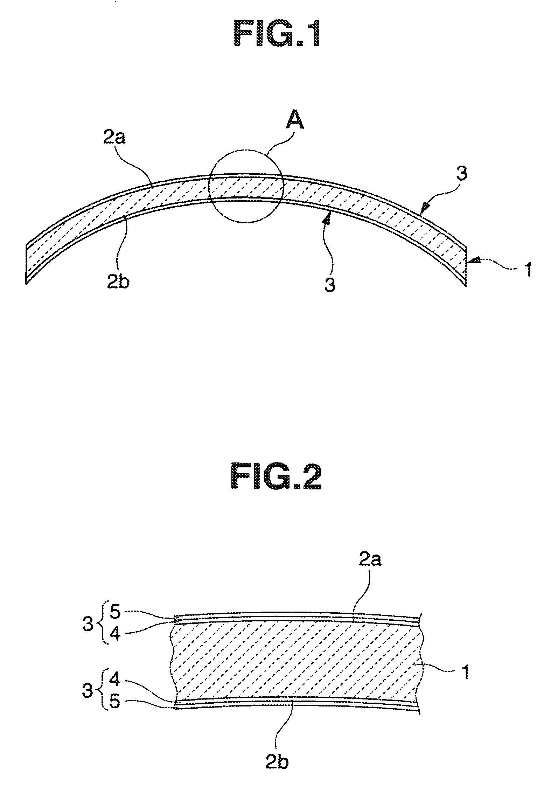

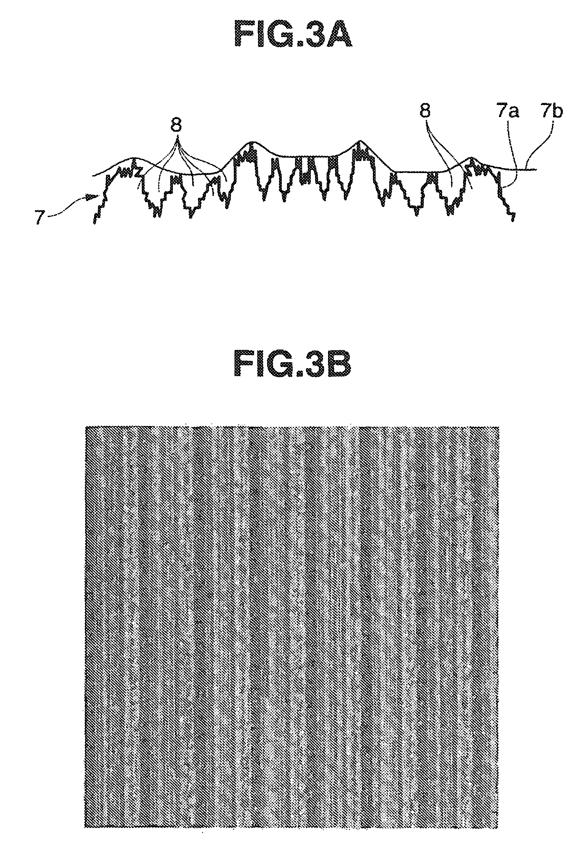

Referring to Figs. 1 and 2, a plastic spectacle lens 1 has a convex optical surface 2a and concave optical surface 2b. Both the optical surfaces 2a and 2b are machined surfaces 7 (Fig. 3A) and respectively have protective coating layers 3 formed on them.

A plastic lens blank is used as the blank of the spectacle lens 1. The lens blank is made of, e.g., a copolymer formed from methyl methacrylate and one or more other types of monomers, a copolymer formed from diethylene glycol bisallylcarbonate and one or more other types of monomers, a copolymer formed from polyurethane and polyurea, polycarbonate, polystyrene, polyvinyl chloride, unsaturated polyester, polyethylene terephthalate, polyurethane, polythiourethane, a sulfide resin formed using an enthiol reaction, and a sulfur-containing vinyl polymer. Although a urethane lens blank is preferable among others, the lens blank is not limited to this,

The lens blank more preferably contains a polythiol compound represented by:

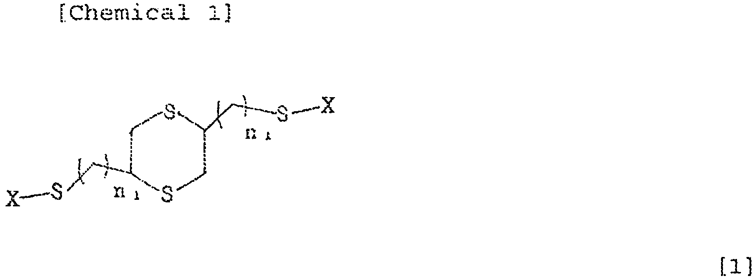

wherein X is (CH₂CH₂S)n₂-H, n₁ is an integer of 1 to 5, and n₂ is an integer of 0 to 2.

In addition, the spectacle lens 1 need only have at least one convex surface, so it may be a biconvex lens or a meniscus lens having both a convex surface and a convex surface. Although the diameter of the lens convex surface used is not particularly limited, it is preferably about 50 to 100 mm. Also, the lens surface curve is preferably defined by a curvature of -8 to +8.

This embodiment exemplifies a case in which the spectacle lens 1 is manufactured using diethylene glycol bisallylcarbonate (Trade Name: CR-39) as the lens blank. To manufacture a spectacle lens 1 of this kind, a casting mold including a cylindrical gasket and a pair of lens-shaped molds are prepared first. After monomers are cast into the casting mold, they are placed in an electric furnace and heated and polymerized for a predetermined time to form a lens material. The formation of a lens material using a mold like this has been conventionally widely known as can be seen from, for example, Japanese Patent Laid-Open No. 2005-141162, and an additional detailed description thereof will not be given.

Both surfaces of the lens material extracted from the casting mold are spirally cut from the periphery to the center by a lathe or a milling machine to form a spectacle lens 1 having a machined surface 7 (Fig. 3A) with a desired roughness. Hence, each of the optical surfaces 2a and 2b of the spectacle lens 1 has vortex undulations (to be referred to as a cutting trace hereinafter) 8 formed in it at a predetermined cycle. The roughnesses (Rt) of the optical surfaces 2a and 2b that are the machined surfaces 7 with the above-mentioned structure are desirably 0.02 to 0.1 µm.

The optical surfaces 2a and 2b are cut using an NC curve generator. In accordance with a curved surface shape to be formed, the NC curve generator generates a curved surface shape to be cut by computer control of the distance of a cutting blade relative to a round lens material and that of the cutting blade relative to a rotating shaft, which passes through a specific point on a curved surface to be cut, while rotating the lens material about the rotating shaft as the center. That is, the curve generator cuts the lens such that the cutting trace forms a spiral shape by rotating the lens about its geometrical center to rectilinearly move the cutting edge of a diamond cutting blade from the lens periphery to the lens center so as to trace the optical surface shape.

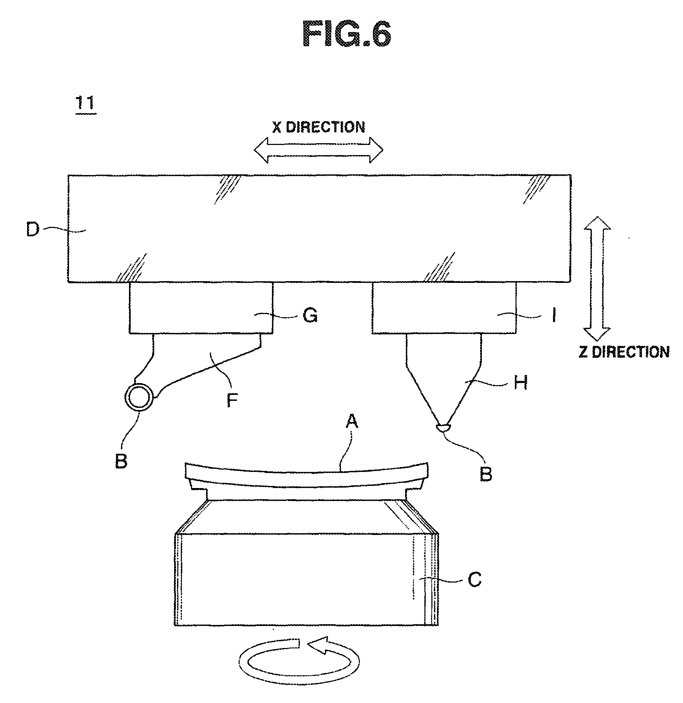

Referring to Fig. 6, an NC curve generator 11 for use in cutting of the optical surfaces 2a and 2b cuts the optical surface of a molded lens material A using sintered polycrystalline diamond or single-crystal natural diamond as a cutting blade B of a cutting tool. In the cutting, the lens material A is attached onto a lower shaft C, which is axially rotated (single-axis control). A tool F or H on an upper shaft D undergoes biaxial control in the radial and vertical directions from the periphery of the lens material A. Thus, the NC curve generator 11 cuts the optical surface of the lens material A by control in a total of three axes. Because only one lower shaft C is attached to the NC curve generator 11, it cannot move in either the X or Y direction and rotates at the current fixed position. The upper shaft D includes a first upper shank G which mounts the first tool F for use in rough cutting, and a second upper shank I which mounts the second tool H for use in finish cutting. The upper shaft D slides in the horizontal direction relative to the lower shaft C to switch between the first and second upper shanks G and I. To form the convex optical surface 2a of the lens material A, cutting is automatically performed by transferring design shape/height data of a convex surface described by a matrix to the NC unit.

The NC curve generator 11 like this has a cutting accuracy of 3 µm or less (Lens Diameter: 50 mm) and a maximum surface roughness (Rt) of 0.02 to 5 µm. In the present invention, the maximum surface roughness (Rt) can be 0.1 to 5 µm but is especially preferably 0.02 to 1 µm. The times taken for only finish cutting of one lens with an outer diameter of, for example, 80 mm are about 1 min, about 5 min, and about 50 min for maximum surface roughnesses (Rt) of 5 µm, 1 µm, and 0.05 µm, respectively.

When a visual test stipulated in JIS-T7313 is conducted for the spectacle lens 1 having its optical surface cut by the NC curve generator 11, surface defects such as the cutting trace 8 are visually observed. The visual test stipulated in JIS-T7313 means herein a material and surface quality evaluation method stipulated in appendix A of JIS-T7313 (a test method which interposes a test lens between a light source and the observer who observes the presence/absence of surface defects on the lens). When, for example, a visual test is conducted for a lens blank cut by a lathe, the cutting trace 8 attributed to a cutting tool is visually observed. The present invention can manufacture a lens, in which no such cutting trace 8 or surface defects are observed by a visual test, by forming a film 4 (to be described later). Note that "surface defects" in the present invention include machining traces such as the cutting trace 8 formed by a mechanical cutting tool, and defects on the surface of a lens blank such as flaws attributed to, e.g., the fabrication and machining of the lens blank.

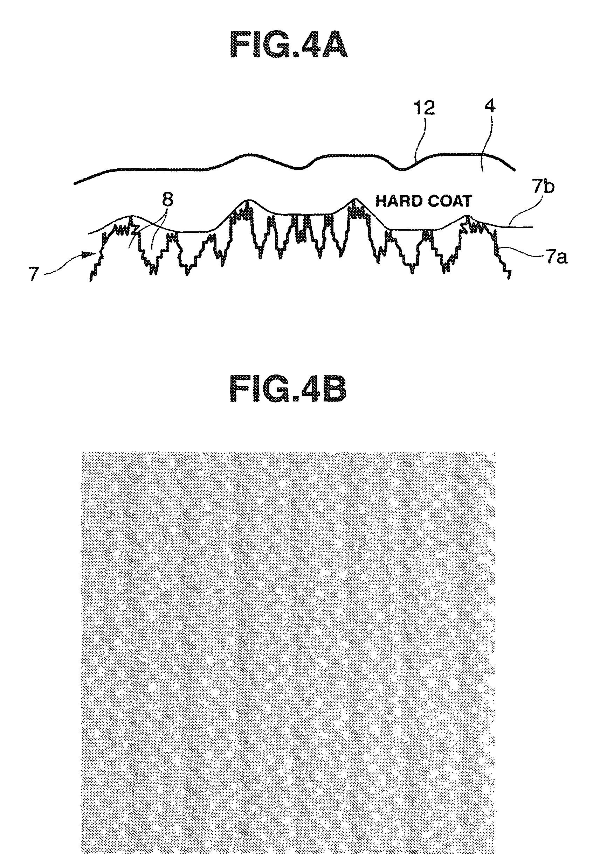

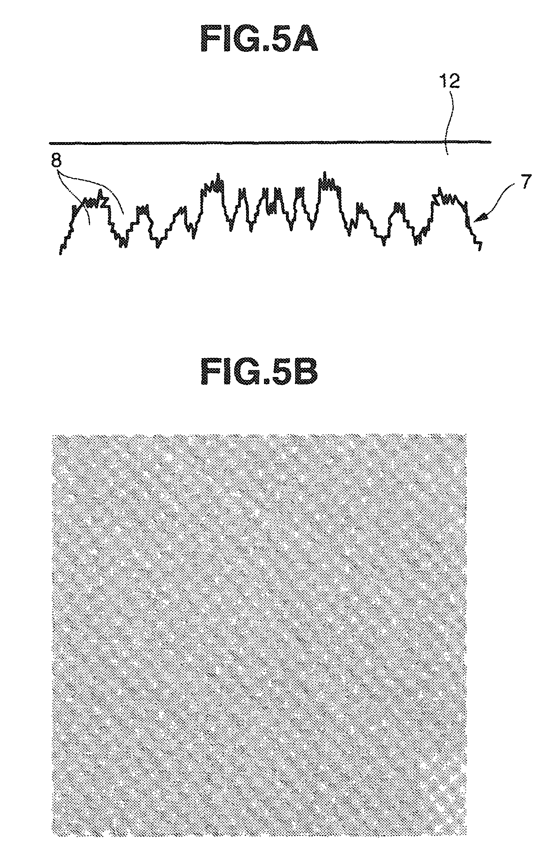

The protective coating layer 3 formed on the lens surface includes two layers, a lower film 4 and an upper film 5. The lower film 4 is formed as a hard coat film using a material with a hardness equal to or higher than that of the spectacle lens 1 so as to improve both the hardness and abrasion resistance of the spectacle lens 1. In addition, the film 4 is desirably formed from a material with quality characteristics such as a refractive index nearly equal to those of the spectacle lens 1 so as to erase the cutting trace 8 in each of the optical surfaces 2a and 2b and improve the optical characteristics of the spectacle lens 1. Since the film 4 has a wavy surface due to the cutting trace 8, as shown in Fig. 4A, this surface is polished into a mirror surface, as shown in Fig. 5A, in the next step.

The hard coat film is harder than the lens blank. Hence, it is easier to control the amount of removal upon, e.g., polishing for the hard coat film than that for the lens blank surface. It is, in turn, easy to remove only wave-like patterns larger than those corresponding to targeted surface roughnesses with wavelengths of 0.05 to 0.5 mm and heights of about 0.05 to 2 µm while keeping deterioration of the remaining optical surface shape relatively small.

Table 1 shows the measured values of the hardnesses of lens blanks.

**[Table 1]**

| Measured Values of Hardnesses of Lens Blanks | | | | | |
|---|---|---|---|---|---|
| | Test Load [mgf] | Maximum Penetration Depth [nm] | Indentation Hardness [mgf/µm²] | Martens Hardness [mgf/µm²] | Composite Young's Modulus [mgf/µm²] |
| Lens Blank | 100 | 1747.36 | 18.64 | 12.31 | 337.2 |
| Lens Blank | 100 | 1267.32 | 36.29 | 23.36 | 606.7 |
| Lens Blank | 100 | 1268.87 | 35.88 | 23.3 | 615.9 |
| Lens Blank | 100 | 1423.64 | 28.69 | 18.53 | 484.2 |

Table 2 shows the measured values of the hardnesses of hard coat films.

**[Table 2]**

| Measured Values of Hardnesses of Hard Coat Films | | | | | |
|---|---|---|---|---|---|
| | Test Load [mgf] | Maximum Penetration Depth [nm] | Indentation Hardness [mgf/µm²] | Martens Hardness [mgf/µm²] | Composite Young's Modulus [mgf/µm²] |
| Hard Coat A | 100 | 314 | 61 | 36 | 799 |
| Hard Coat B | 100 | 300 | 65 | 39 | 912 |
| Hard Coat C | 100 | 324 | 56 | 34 | 772 |
| Hard Coat D | 100 | 302 | 69 | 39 | 816 |
| Hard Coat E | 100 | 363 | 56 | 27 | 483 |
| Hard Coat F | 100 | 282 | 76 | 44 | 979 |
| Hard Coat G | 100 | 306 | 69 | 38 | 763 |

The hardnesses of lens blanks and hard coat films were measured by a method conforming to IS014577 using an ultra-micro penetration hardness tester.

The upper film 5 is formed as an antireflection film so as to enhance an antireflection effect and an abrasion resistance effect. The film 5 is made of, for example, a metal oxide of Zr, Ti, Sn, Si, In, Al, or another element or MgF₂.

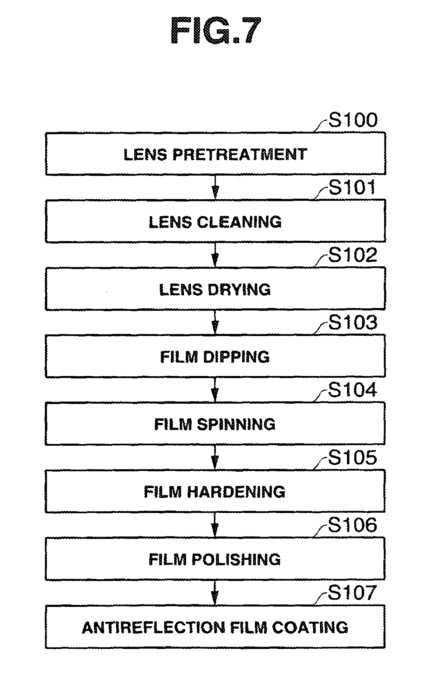

A method of manufacturing a spectacle lens and an optical test of the spectacle lens will be explained next with reference to Figs. 7 to 9.

### [Lens Pretreatment Step]

Referring to Fig. 7, optical surfaces 2a and 2b of a spectacle lens 1, which are machined into predetermined curved surfaces, are pretreated (step S100). This pretreatment includes, e.g., hand cleansing with a solvent such as acetone, static electricity removal by ionized air blowing, and dirt removal. The preprocess need only be effective in coating with the film 4, and may adopt other methods.

### [Lens Cleaning Step]

After the pretreatment of the optical surfaces 2a and 2b is completed, the spectacle lens 1 is transferred to a cleaning unit by a transfer mechanism and is cleaned using a cleaning liquid in a cleaning tank (step S101). The cleaning liquid is, e.g., water (pure water), a solvent liquid, or a cleaning solution. The cleaning liquid circulates while being filtered by a pump between the cleaning tank and an equipped reserve tank while making the cleaning liquid overflow in the cleaning tank. The cleaning tank includes an ultrasonic element and other elements, necessary for cleaning and cleaning liquid circulation, such as a temperature regulator and various types of defection switches.

### [Lens Drying Step]

The cleaned spectacle lens 1 is dried to remove the cleaning liquid adhering on the optical surfaces 2a and 2b (step S102). The drying method performed is, e.g., a method of drying the spectacle lens 1 by dipping it into warm water and then holding it in the air, a method of drying the spectacle lens 1 by warm air, or a method of drying the spectacle lens 1 by attaching it on a spinner rotor, and rotating the rotor at a predetermined speed to blow off the cleaning liquid adhering on the spectacle lens 1 by a centrifugal force. The thus dried spectacle lens 1 is sent to a dipping step or a spinning step in accordance with the film formation method adopted.

### [Film Dipping Step]

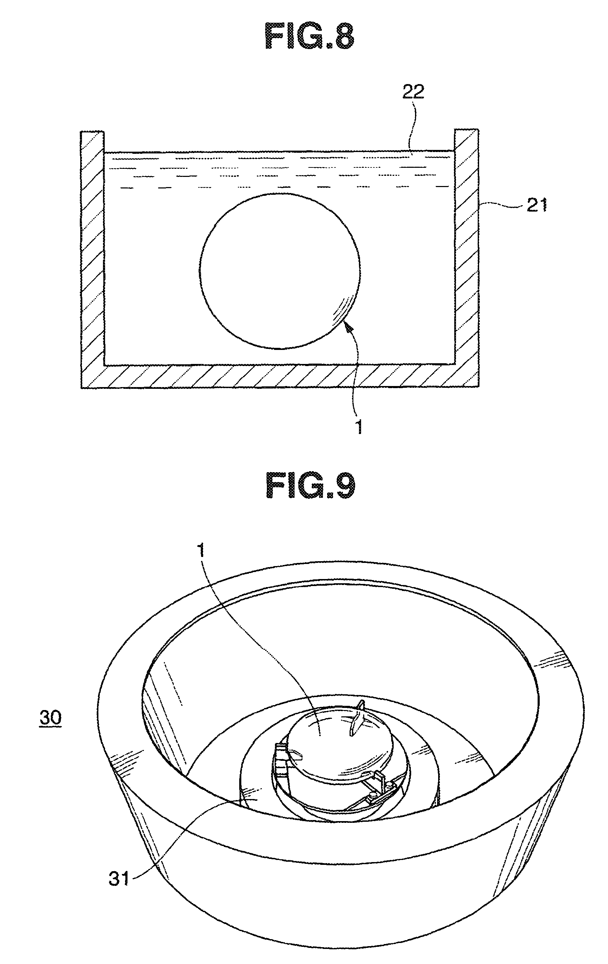

When the dried spectacle lens 1 is transferred to a dipping unit, it is dipped in a film solution 22 in a dipping tank 21 for a predetermined time (e.g., about 30 sec), as shown in Fig. 8 (step S103). The film solution 22 is a solution with a refractive index nearly equal to that of the material of the spectacle lens 1 or a solution containing a metal oxide which allows the solution to have an Abbe number nearly equal to that of the material of the spectacle lens 1, and is applied onto both the optical surfaces 2a and 2b at once.

### [Film Spinning Step]

When a film is formed by spinning in place of dipping, the spectacle lens 1 is transferred to a spinning unit 30 shown in Fig. 9 and attached onto a spinner 31, The spinner 31 rotates the spectacle lens 1 at a predetermined speed to blow off, by a centrifugal force, any redundant film solution dropped on the optical surface 2a or 2b (step S104). The rotation speed of the spinner 31 can be freely variably set. The spin conditions (e.g., the spin rotation speed, leading edge, trailing edge, and stop) can be set by a program and are appropriately determined in accordance with the type of lens blank and the cleaning state.

### [Film Hardening Step]

After the dipping or spinning of the film solution 22 is completed, the film on the spectacle lens 1 is hardened by heating, solvent evaporation, or ultraviolet rays (step S105). With this operation, the film solution applied on each of the optical surfaces 2a and 2b of the spectacle lens 1 is hardened into the film 4 shown in Fig. 4A. The thickness of the film 4 is about 2 to 10 µm.

Because the film 4 like this is formed by hardening the dip- or spin-coated film solution, it has a high surface accuracy and smoothes short-wavelength components 7a (minute projections and grooves) of the roughness of the machined surface 7. The film 4 also smoothes middle- and long-wavelength components 7b (envelope) of the roughness of the machined surface 7, However, when the film solution is dried and hardened and is left intact thereafter, the envelope 7b of the machined surface 7 visualizes as gentle wave-like patterns (undulations) 12 on the surface of the film 4 (Fig. 4A). These wave-like patterns 12 account for a stripe pattern (Fig. 4B) on the lens and oscillation of the transmitted image.

### [Hard Coat Film Polishing Step]

The surface of the film 4 is polished to eliminate the wave-like patterns 12 (step S106). By eliminating the wave-like patterns 12, as shown in Fig. 5A, the surface of the film 4 turns into a mirror surface free from any stripe pattern (Fig. 5B). Note that the surface roughness Rt of the film 4 is about 0.010 to 0.08 µm when the surface roughnesses (Rt) of the optical surfaces 2a and 2b are 0.01 to 0.1 µm.

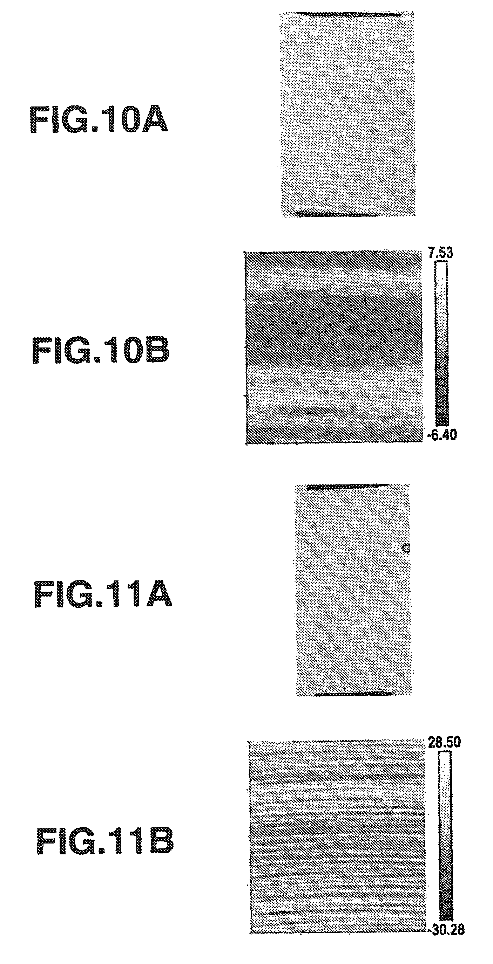

Figs. 10A and 10B show the result of measurement by a white light interference shape measurement apparatus, and a projection test image, respectively. As a Comparative Example, Figs. 11A and 11B show the result of measurement by the white light interference shape measurement apparatus, and a projection test image, respectively, when a hard coat film is applied onto the lens and is left intact without polishing. Note that the image density in Fig. 10B is - 6.40 to 7.53 and that in Fig. 11B is -30.28 to 28.50.

The film 4 is polished using, for example, a woolen polishing pad or a rubber polishing jig as disclosed in Japanese Patent Laid-Open No. 2003-266287. The amount of polishing of the film 4 is preferably about 5 µm or less.

### [Antireflection Film Coating Step]

After the step of polishing the film 4 is completed, an antireflection film 5 is continuously formed on the hard coat film 4 (step S107). An antireflection film 5 is formed by the conventionally known vacuum deposition or sputtering method, and a detailed description thereof will not be given. The surface of the antireflection film 5 is formed into a mirror surface nearly equivalent to the hard coat film 4 and therefore need not be polished.

A visual appearance test stipulated in JIS -T7313 mentioned above was conducted for the thus manufactured spectacle lens 1, and no surface detects such as a cutting trace 8 were observed.

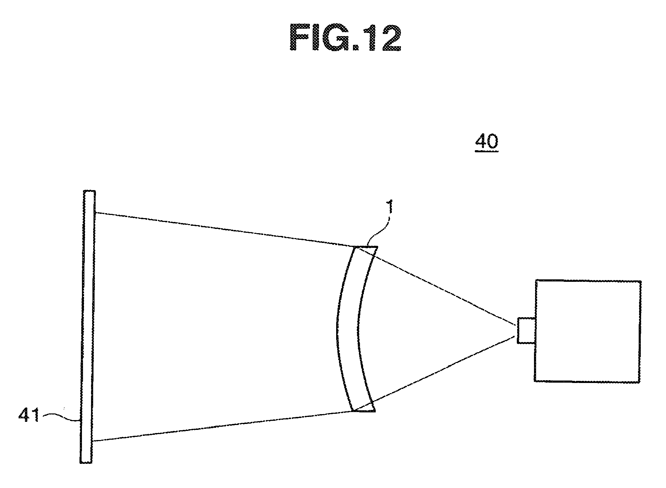

In the present invention, the lens appearance test can also be a projection test in which whether the lens is non-defective or defective is determined based on whether an image of, e.g., a cutting trace or flaw is projected onto a screen, located on the exit side, when the lens is irradiated with predetermined light. This projection test is an application of the schlieren method and is used to test the surface properties by a projection test apparatus 40 which employs, for example, a superhigh-pressure mercury lamp shown in Fig. 12. In this projection test, the superhigh-pressure mercury lamp (manufactured by, e.g., Ushio Inc.) in the projection test apparatus 40 is turned on to irradiate the spectacle lens 1 with light, thereby projecting images of the optical surfaces 2a and 2b onto a screen 41. The operator observes the images of the optical surfaces 2a and 2b projected on the screen 41 with his or her naked eyes to visually check whether a surface defect such as a cutting trace appears on the screen 41. According to this method, since the operator can more clearly observe surface defects, he or she can often observe even relatively minute defects as the projected images. In the present invention, a lens free from even surface detects, projected images of which can hardly be observed without such a precise projection test, is preferably obtained by forming the hard coat film 4.

The test result revealed that, when the spectacle lens 1 manufactured by the present invention using diethylene glycol bisallylcarbonate as a lens blank had optical surfaces 2a and 2b with a roughness (Rt) of 0.02 to 0.1 µm, any cutting traces 8 in both the optical surfaces 2a and 2b were erased and therefore could not be visually observed. This is because the spectacle lens 1 and the film 4 have nearly the same refractive index and therefore have a small difference in diffractive index between them, thus preventing the occurrences of reflection and scattering by the interface between the optical surfaces 2a and 2b and the film 4.

The surface properties of the spectacle lens 1 were tested not only by the projection test apparatus 40 but also by a transmission test using a fluorescent lamp placed in a dark box and a test for checking light which is emitted by the internal fluorescent lamp and reflected by the lens surface. The result of the transmission test using a fluorescent lamp revealed that any cutting trace 8 was erased and could not be visually observed, like the test using the projection test apparatus 40.

Also, in the present invention, since the surface of the film 4 is polished into a mirror surface, it is possible to improve the optical qualities of a spectacle lens free from any stripe pattern attributed to the wave-like patterns 12 and any oscillation of the transmitted image.

The projection test result of a sample of a cut lens and a sample formed by coating a cut lens with a film, and the projection test result of a sample having the film polished will be described in detail below with reference to the following Examples.

### <Comparative Example>

Only one surface (to be referred to as the cutting surface hereinafter) of a semifinished lens containing urethane resin was cut by a cutting/grinding machine, which employed a single-crystal diamond tool with a tip radius of 2 mm, at a feed pitch of 10 µm, a cutting depth of 100 µm, and a work rotation speed of 1,000 rpm. The cut lens had a cutting trace observed by a projection test using a high-pressure mercury lamp.

A hard coat film was formed on the lens by a dipping method and was dried and hardened by precuring at 80°C for 20 min and final curing at 120°C for 1 hr. The lens had a cutting trace observed again by a projection optical test.

### <Example 1>

Only one surface (to be referred to as the cutting surface hereinafter) of a semifinished lens containing urethane resin was cut by a cutting/grinding machine, which employed a single-crystal diamond tool with a tip radius of 2 mm, at a feed pitch of 10 µm, a cutting depth of 100 µm, and a work rotation speed of 1,000 rpm. The cut lens had a cutting trace observed by a projection test using a high-pressure mercury lamp.

A hard coat film was formed on the lens by a dipping method and was dried and hardened by procuring at 80°C for 20 min and final curing at 120°C for 1 hr. The lens also had a cutting trace observed by a projection optical test.

Protective tape (e.g., MSX-5847 manufactured by 3M) was attached onto the non-cutting surface (a surface opposite to the cutting surface) of the lens, was coated with wax, and was attached onto a polishing jig. The lens was mounted on a polishing machine and its cutting surface was polished by a woolen polishing pad and a polishing agent. The lens was polished under the condition in which it was applied with a load of 170 gf/cm² (≈ 1.67 × 10⁴ Pa) and was polished for 30 sec while being rotated by a grinder rotating at a speed of 170 rpm. After the polishing was completed, a projection test was conducted by a high-pressure mercury lamp. Table 3 shows the projection test result.

**[Table 3]**

| Projection Test Result of Cutting Trace | |
|---|---|
| Sample | Result |
| Example 1 | Excellent |
| Comparative Example | Poor |

| | |
|---|---|
| Excellent: No cutting trace is observed Poor: A cutting trace is clearly observed | |

As is clear from table 3, according to Example 1, no cutting trace 8 was observed. In contrast, a cutting trace 8 was observed in Comparative Example.
Note that a cutting trace in the present invention means regular and irregular densities (corresponding to projections and grooves of the surface shape) which can be observed by a projection test, include a lathe mark (machining trace), and correspond to middle- and long-wavelength components other than short-wavelength components, which are defined as surface roughness. That is, the present invention obtains an optical surface by eliminating any tarnish attributed to short-wavelength components as surface roughness by a step of forming a film on the machined optical surface of a spectacle lens, and eliminating optical defects (densities and projections/grooves) attributed to middle- and long-wavelength components by a step of polishing the hardened film.

### <Example 2>

Only one surface (to be referred to as the cutting surface hereinafter) of a semifinished lens containing urethane resin was cut by a cutting/grinding machine, which employed a single-crystal diamond tool with a tip radius of 2 mm, at a feed pitch of 10 µm, a cutting depth of 100 µm, and a work rotation speed of 1,000 rpm. The cut lens had a cutting trace observed by a projection test using a high-pressure mercury lamp.

A hard coat film was formed on the lens by a dipping method and was dried and hardened by procuring at 80°C for 20 min and final curing at 120°C for 1 hr. The lens had a cutting trace observed again by a projection optical test.

Protective tape was attached onto the non-cutting surface of the lens, was coated with wax, and was attached onto a polishing jig. The lens was mounted on a polishing machine and polished by a woolen polishing pad and a polishing agent. The lens was polished under the condition in which it was applied with a load of 300 mbar (≈ 3.0 × 10⁴ Pa) and was polished for 180 sec while being rotated by a grinder rotating at a speed of 500 rpm. After the polishing was completed, a projection test was conducted by a high-pressure mercury lamp. The result revealed that any cutting trace disappeared.

**[Table 4]**

| Projection Test Result of Polishing Sag | | | | |
|---|---|---|---|---|
| Sample | Polishing Time | | | |
| | 0 sec | 15 sec | 30 sec | 60 sec |
| Example 2 | Excellent | Excellent | Excellent | Fair |
| Comparative Example | Excellent | Fair | Fair | Poor |

| | | | | |
|---|---|---|---|---|
| Excellent: No polishing sag is observed Fair: A slight polishing sag is observed Poor: A polishing sag is clearly observed | | | | |

As is clear from table 4, according to Example 2, no cutting trace 8 was observed when the polishing time was 180 sec.

Although a protective coating layer 3 is formed on each of optical surfaces 2a and 2b of a spectacle lens 1 in the above-mentioned embodiment, the present invention is not particularly limited to this, and a protective coating layer 3 may be formed on only one optical surface, for example, only the convex optical surface 2a. Also, an antireflection film 5 is not always necessary.
Moreover, an NC milling machine which employs a CAM is also preferable as a cutting machine for forming the optical surfaces 2a and 2b of the spectacle lens 1.
In a preferred embodiment of a spectacle lens according to the present invention, a lens machined surface with a roughness Rt of 0.02 to 0.1 µm and an arithmetic average roughness of 0.02 to 0.1 µm is also viable, in addition to the above-mentioned surface roughness.

## Claims

1. A method of manufacturing a spectacle lens (1), comprising the steps of:
forming a film (4) on a machined optical surface (2a, 2b) of the spectacle lens (1);
drying and hardening the film (4); and
polishing the hardened film (4);
**characterized in that**, a wave-like pattern of undulations (12) having wavelengths of 0.05 to 0.5 mm and lenghts of 0.05 to 2 µm is formed on the spectacle lens as a result of the step of drying and hardening the film,
the polishing is performent in order to smoothen said pattern of undulations (12) present on said optical surface (2a, 2b) in order to eliminate any oscillations of the transmitted image.

2. A method of manufacturing a spectacle lens (1) according to claim 1,
wherein the film (4) is made of a material harder than a material of the spectacle lens (1).

3. A method of manufacturing a spectacle lens (1) according to claim 1,
wherein a roughness Rt of the machined surface (2a,2b) of the spectacle lens is 0.02 to 0.1 µm.

4. A method of manufacturing a spectacle lens (1) according to claim 1,
wherein the film (4) is a hard coat film.

5. A method of manufacturing a spectacle lens (1) according to claim 1,
wherein a thickness of the film (4) is 2 to 50 µm.

6. A method of manufacturing a spectacle lens (1) according to claim 1,
wherein an amount of polishing of the film (4) is 1 to 5 µm.

7. A method of manufacturing a spectacle lens (1) according to claim 1,
wherein a blank of the spectacle lens (1) is a plastic lens blank.

8. A method of manufacturing a spectacle lens (1) according to claim 7,
wherein the plastic lens blank is one of a urethane optical blank and an allyl optical blank.

## Patentansprüche

1. Verfahren zum Herstellen eines Brillenglases (1), umfassend die Schritte:
Bilden eines Films (4) auf einer maschinell bearbeiteten optischen Oberfläche (2a, 2b) des Brillenglases (1);
Trocknen und Aushärten des Films (4); und
Polieren des gehärteten Films (4);
**dadurch gekennzeichnet, dass** ein wellenförmiges Muster von Undulationen (12) mit Wellenlängen von 0,05 bis 0,5 mm und Höhen von 0,05 bis 2 µm als eine Folge des Schritts des Trocknens und Aushärtens des Films auf dem Brillenglas gebildet wird,
wobei das Polieren durchgeführt wird, um das auf der optischen Oberfläche (2a, 2b) vorhandene Muster von Undulationen (12) zu glätten, um Oszillationen des transmittierten Bilds zu eliminieren.

2. Verfahren zum Herstellen eines Brillenglases (1) nach Anspruch 1, wobei der Film (4) aus einem Material hergestellt ist, das härter als ein Material des Brillenglases (1) ist.

3. Verfahren zum Herstellen eines Brillenglases (1) nach Anspruch 1, wobei eine Rauhigkeit Rt der maschinell bearbeiteten Oberfläche (2a, 2b) des Brillenglases (1) 0,02 bis 0,1 µm beträgt.

4. Verfahren zum Herstellen eines Brillenglases (1) nach Anspruch 1, wobei der Film (4) ein Hartschichtfilm ist.

5. Verfahren zum Herstellen eines Brillenglases (1) nach Anspruch 1, wobei eine Dicke des Films (4) 2 bis 50 µm beträgt.

6. Verfahren zum Herstellen eines Brillenglases (1) nach Anspruch 1, wobei ein Betrag des Polierens des Films (4) 1 bis 5 µm beträgt.

7. Verfahren zum Herstellen eines Brillenglases (1) nach Anspruch 1, wobei ein Rohling des Brillenglases (1) ein Kunststoffglasrohling ist.

8. Verfahren zum Herstellen eines Brillenglases (1) nach Anspruch 7, wobei der Kunststoffglasrohling ein Urethan-Optikrohling oder ein Allyl-Optikrohling ist.

## Revendications

1. Procédé de fabrication d'un verre de lunettes (1), comprenant les étapes :
de formation d'un film (4) sur une surface optique usinée (2a, 2b) du verre de lunettes (1) ;
de séchage et de durcissement du film (4) ; et
de polissage du film durci (4),
**caractérisé en ce qu'**un motif d'ondulations (12) de type vague ayant des longueurs d'onde de 0,05 à 0,5 mm et des hauteurs de 0,05 à 2 µm est formé sur le verre de lunettes par suite de l'étape de séchage et de durcissement du film,
le polissage est réalisé afin de lisser ledit motif d'ondulation (12) présent sur ladite surface optique (2a, 2b) dans le but d'éliminer toute oscillation de l'image transmise.

2. Procédé de fabrication d'un verre de lunettes (1) selon la revendication 1,
dans lequel le film (4) est fabriqué dans un matériau plus dur qu'un matériau du verre de lunettes (1).

3. Procédé de fabrication d'un verre de lunettes (7) selon la revendication 1,
dans lequel une rugosité Rt de la surface usinée (2a, 2b) du verre de lunettes (1) est de 0,02 à 0,1 µm.

4. Procédé de fabrication d'un verre de lunettes (1) selon la revendication 1,
dans lequel le film (4) est un film de revêtement dur.

5. Procédé de fabrication d'un verre de lunettes (1) selon la revendication 1,
dans lequel une épaisseur du film (4) est de 2 à 50 µm.

6. Procédé de fabrication d'un verre de lunettes (1) selon la revendication 1,
dans lequel une quantité de polissage du film (4) est de 1 à 5 µm.

7. Procédé de fabrication d'un verre de lunettes (1) selon la revendication 1,
dans lequel une ébauche du verre de lunettes (1) est une ébauche de verre en plastique.

8. Procédé de fabrication d'un verre de lunettes (1) selon la revendication 7,
dans lequel l'ébauche de verre en plastique est une ébauche optique en uréthane ou une ébauche optique en allyle.
